(19) Europäisches Patentamt
European Patent Office
Office européen des brevets

(11) **EP 2 922 026 B1**

(12) **EUROPEAN PATENT SPECIFICATION**

(45) Date of publication and mention
of the grant of the patent:
**08.05.2024 Bulletin 2024/19**

(21) Application number: **15159794.5**

(22) Date of filing: **19.03.2015**

(51) International Patent Classification (IPC):
**G06T 7/593** *(2017.01)*

(52) Cooperative Patent Classification (CPC):
**G06T 7/593;** G06T 2207/10012; G06T 2207/20012;
G06T 2207/30252

(54) **DISPARITY DERIVING APPARATUS, METHOD AND CARRIER MEDIUM**

DISPARITÄTSABLEITVORRICHTUNG, VERFAHREN ZUR DISPARITÄTSABLEITUNG UND TRÄGERMEDIUM

APPAREIL DE DÉRIVATION DE DISPARITÉ, PROCÉDÉ PERMETTANT DE DÉRIVER UNE DISPARITÉ ET MILIEU DE SUPPORT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.03.2014 JP 2014058716
16.03.2015 JP 2015051955**

(43) Date of publication of application:
**23.09.2015 Bulletin 2015/39**

(73) Proprietor: **Ricoh Company, Ltd.
Tokyo 143-8555 (JP)**

(72) Inventor: **Saitoh, Kiichiroh
Tokyo 143-8555 (JP)**

(74) Representative: **SSM Sandmair
Patentanwälte Rechtsanwalt
Partnerschaft mbB
Joseph-Wild-Straße 20
81829 München (DE)**

(56) References cited:
**WO-A2-2008/134829    US-A1- 2005 131 646**

• HIRSCHMULLER H: "Accurate and Efficient Stereo Processing by Semi-Global Matching and Mutual Information", PROCEEDINGS / 2005 IEEE COMPUTER SOCIETY CONFERENCE ON COMPUTER VISION AND PATTERN RECOGNITION, CVPR 2005 : [20 - 25 JUNE 2005, SAN DIEGO, CA], IEEE, PISCATAWAY, NJ, USA, vol. 2, 20 June 2005 (2005-06-20), pages 807-814, XP010817537, DOI: 10.1109/CVPR.2005.56 ISBN: 978-0-7695-2372-9
• TOMBARI F ET AL: "Classification and evaluation of cost aggregation methods for stereo correspondence", COMPUTER VISION AND PATTERN RECOGNITION, 2008. CVPR 2008. IEEE CONFERENCE ON, IEEE, PISCATAWAY, NJ, USA, 23 June 2008 (2008-06-23), pages 1-8, XP031297235, ISBN: 978-1-4244-2242-5
• Kuk-Jin Yoon ET AL: "Adaptive support-weight approach for correspondence search", IEEE Transactions on Pattern Analysis and Machine Intelligence, 1 January 2006 (2006-01-01), pages 650-656, XP055205284, New York DOI: 10.1109/TPAMI.2006.70 Retrieved from the Internet: URL:http://ieeexplore.ieee.org/xpls/abs_all.jsp?arnumber=1597121
• TINGBO HU ET AL: "Stereo matching using weighted dynamic programming on a single-direction four-connected tree", COMPUTER VISION AND IMAGE UNDERSTANDING, ACADEMIC PRESS, US, vol. 116, no. 8, 13 April 2012 (2012-04-13), pages 908-921, XP028509726, ISSN: 1077-3142, DOI: 10.1016/J.CVIU.2012.04.003 [retrieved on 2012-04-25]

**EP 2 922 026 B1**

**(Cont. next page)**

- **XIAO XIONGWU ET AL: "Stereo Matching with Weighted Feature Constraints for Aerial Images", 2013 SEVENTH INTERNATIONAL CONFERENCE ON IMAGE AND GRAPHICS, IEEE, 26 July 2013 (2013-07-26), pages 562-567, XP032515462, DOI: 10.1109/ICIG.2013.118 [retrieved on 2013-10-21]**
- **SPANGENBERG ROBERT ET AL: "Weighted Semi-Global Matching and Center-Symmetric Census Transform for Robust Driver Assistance", 27 August 2013 (2013-08-27), ADVANCES IN COMMUNICATION NETWORKING : 20TH EUNICE/IFIP EG 6.2, 6.6 INTERNATIONAL WORKSHOP, RENNES, FRANCE, SEPTEMBER 1-5, 2014, REVISED SELECTED PAPERS; [LECTURE NOTES IN COMPUTER SCIENCE , ISSN 1611-3349], SPRINGER VERLAG, DE, PAGE(S) 34 - 41, XP047038851, ISSN: 0302-9743 ISBN: 978-3-319-21667-6 * abstract * * Section 3 ***

**Description**

BACKGROUND

Technical Field

The present invention relates to deriving disparity of an object based on a reference image and a comparison image each obtained by capturing an image of the same object.

Background Art

A range-finding method using disparity information is conventionally known, in which disparity of an object observed by a stereo camera is derived by stereo imaging, and a disparity value indicating this disparity is used to measure the distance from the stereo camera to the object based on the principle of triangulation. With this range-finding method, for example, the distance between two automobiles or between an automobile and obstacles can be measured and utilized for preventing automobile collisions. The range-finding method may be also referred to as the distance measurement method.

Specifically, a stereo matching process is employed for deriving disparity. In the stereo matching process, a reference image is captured by one camera of a stereo camera, composed of two cameras, and a comparison image is captured by the other camera of the stereo camera. Then, by successively shifting a plurality of candidate corresponding pixels in the comparison image relative to one reference pixel set in the reference image, a position of a corresponding pixel having an image signal that is the most similar to an image signal of the reference pixel set in the reference image is identified to derive a disparity value between the reference image and the comparison image. Typically, luminance values of image signals obtained by the two cameras are compared to compute "cost" (hereinafter, cost means "dissimilarity") of the compared luminance values, with which a position of a pixel having the smallest cost is identified. Further, the stereo matching process can employ a block matching process to prevent mismatching, in which luminance at edges in an image where luminance changes greatly are compared as disclosed in JP-2006-090896-A.

However, for areas having weak texture (i.e., an area where the magnitude of luminance change of an object is weak) and the features to be extracted are themselves diminished, edge detection may not be effective.

In view of this ineffective edge detection, a method that derives more accurate disparity for an object having weak texture is proposed as disclosed in JP-2012-181142-A. In this method, the cost of one reference pixel in a reference image and also the costs of other pixels around the one reference pixel are aggregated to derive disparity for an object having weak texture. With this method, disparity of the entirety of the object can be derived and used not only for range-finding but also classification of the object (e.g., whether the object is a sign or an automobile).

When the method disclosed in JP-2012-181142-A is applied for capturing a scene including an object having weak texture and an object having strong texture that may exist at relatively far positions with each other, disparity can be derived for the weak-texture object and the strong-texture object on a reference image. However, disparity at one area composed of pixels corresponding to the strong-texture object may affect disparity at another area composed of pixels corresponding to the weak-texture object. Therefore, disparity detection cannot be performed with high precision.

HIRSCHMULLER H, "Accurate and Efficient Stereo Processing by Semi-Global Matching and Mutual Information", PROCEEDINGS / 2005 IEEE COMPUTER SOCIETY CONFERENCE ON COMPUTER VISION AND PATTERN RECOGNITION, CVPR 2005 : [20 - 25 JUNE 2005, SAN DIEGO, CA], IEEE, PISCATAWAY, NJ, USA, (20050620), vol. 2, doi:10.1109/CVPR.2005.56, ISBN 978-0-7695-2372-9, PAGE 807 - 814, discloses a method of accurate stereo matching especially at object boundaries using a semi-global matching (SGM) approach.

TOMBARI F ET AL, "Classification and evaluation of cost aggregation methods for stereo correspondence", COMPUTER VISION AND PATTERN RECOGNITION, 2008. CVPR 2008. IEEE CONFERENCE ON, IEEE, PISCATAWAY, NJ, USA, (20080623), ISBN 978-1-4244-2242-5, PAGE 1 - 8, discloses a survey of main cost aggregation approach costs proposed in literature. The approaches are compared to one another by applying them to a standard data set. One of the approaches includes using adaptive weights which are computed based on two cues of the distance in the color space and distance in the coordinate space (proximity).

Kuk-Jin Yoon ET AL, "Adaptive support-weight approach for correspondence search", IEEE Transactions on Pattern Analysis and Machine Intelligence, New York, doi:10.1109/TPAMI.2006.70, (20060101), PAGE 650 - 656, URL:http://ieeexplore.ieee.org/xpls/abs_all.jsp?arnumber=1597121, discloses use of weighted dynamic in a stereo matching algorithm, wherein a route being longer is assigned a lower weight than a shorter route.

XIAO XIONGWU ET AL: "Stereo Matching with Weighted Feature Constraints for Aerial Images", 2013 SEVENTH INTERNATIONAL CONFERENCE ON IMAGE AND GRAPHICS, IEEE, 26 July 2013, pages 562-567 discloses a ground control points-based semi-global stereo matching method for a real images. Ground control points are incorporated into the global energy function model in semi-global matching to lessen matching ambiguities.

SUMMARY

The invention is defined by the independent claims. The dependent claims relate to preferred embodiments of the invention.

In accordance with the invention, the present invention, even if an object having weak texture and an object having strong texture exist in the same scene, an effect of the disparity at the strong-texture object to disparity at the weak-texture object can be reduced. Therefore, disparity detection can be performed with high precision.

BRIEF DESCRIPTION OF THE DRAWINGS

A more complete appreciation of the disclosure and many of the attendant advantages and features thereof can be readily obtained and understood from the following detailed description with reference to the accompanying drawings, wherein:

FIG. 1 illustrates the principle of computing the distance from an imaging device to an object;
FIG. 2A is an example of a reference image;
FIG. 2B is an example of a high density disparity image generated from the reference image of FIG. 2A;
FIG. 2C is an example of an edge disparity image generated from the reference image of FIG. 2A;
FIG. 3A is a conceptual diagram illustrating a reference pixel in a reference image;
FIG. 3B is a conceptual diagram for explaining calculating cost by successively shifting candidate corresponding pixels in a comparison image relative to the reference pixel shown in FIG. 3A;
FIG. 4 is a graph of a cost profile plotting costs with respect to shift values;
FIG. 5 is a conceptual diagram for explaining deriving a synthesis cost;
FIG. 6 is a graph of a synthesis cost profile plotting synthesis costs with respect to disparity values;
FIG. 7A is a schematic side view of a vehicle mounting an object recognition system according to one or more example embodiments;
FIG. 7B is a schematic front view of the vehicle of FIG. 7A;
FIG. 8 is a schematic perspective view of the object recognition system of FIG. 7A;
FIG. 9 is a block diagram example of hardware configuration of the object recognition system of FIG. 7;
FIG. 10 is a conceptual diagram for explaining deriving directional path cost on a reference image;
FIG. 11 is a schematic diagram illustrating a hardware configuration of a main part of a disparity deriving apparatus;
FIG. 12 is a conceptual diagram or explaining deriving synthesis cost in accordance with the invention;
FIG. 13 is a flowchart illustrating operation of disparity computation according to one or more example embodiments;
FIG. 14A is an example of a reference image;
FIG. 14B is a part of the reference image of FIG. 14A;
FIG. 14C is a high density disparity image generated by applying equation (3) to the reference image of FIG. 14B;
FIG. 14D is a high density disparity image generated by applying equation (3') to the reference image of FIG. 14B;
FIG. 14E is another high density disparity image generated by applying equation (3') to the reference image of FIG. 14B;
FIG. 15 is a schematic view of a reference image, which is expanded partially; and
FIG. 16 illustrates examples of cost profiles with respect shift values and an example of a synthesis cost profile with respect shift values on the reference image of FIG. 15.

DETAILED DESCRIPTION

A description is now given of exemplary embodiments of the present invention. It should be noted that although such terms as first, second, etc. may be used herein to describe various elements, components, regions, layers and/or sections, it should be understood that such elements, components, regions, layers and/or sections are not limited thereby because such terms are relative, that is, used only to distinguish one element, component, region, layer or section from another region, layer or section. Thus, for example, a first element, component, region, layer or section discussed below could be termed a second element, component, region, layer or section without departing from the teachings of the present invention.

In addition, it should be noted that the terminology used herein is for the purpose of describing particular embodiments only and is not intended to be limiting of the present invention. Thus, for example, as used herein, the singular forms "a", "an" and "the" are intended to include the plural forms as well, unless the context clearly indicates otherwise. Moreover, the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

Furthermore, although in describing views shown in the drawings, specific terminology is employed for the sake of clarity, the present disclosure is not limited to the specific terminology so selected and it is to be understood that each specific element includes all technical equivalents that operate in a similar manner and achieve a similar result. Referring now to the drawings, an apparatus or system according to one or more example embodiments are described hereinafter.

(Overview of range-finding method using SGM)

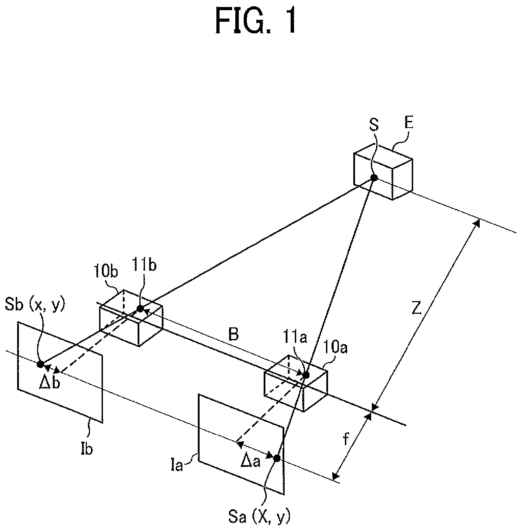

Referring to FIGs. 1 to 6, a description is given of a range-finding method using semi-global matching (SGM). Since SGM is disclosed in "Accurate and Efficient Stereo Processing by Semi-Global Matching and Mutual Information" (author: Hirschmuller, H. Inst. of Robotics & Mechatronics Oberpfaffenhofen, German Aerosp. Center, Wessling, Germany), only a brief explanation of SGM is given below.

Referring to FIG. 1, a description is given of the principle of measuring distance from a stereo camera to an object, in which disparity of the object is derived as a disparity value by conducting stereo imaging using the stereo camera, and the derived disparity value is used to measure the distance from the stereo camera to the object.

FIG. 1 illustrates the principle of computing the distance from the stereo camera used as an imaging device to an object. In the following description, the range-finding process is described based on the units of pixels rather than the units of areas composed of a plurality of pixels for the simplification of description. When the range-finding process is conducted based on the unit of the areas composed of the plurality of pixels, an area including a reference pixel is used as a reference area, and an area including a corresponding pixel, which may correspond to the reference pixel, is used as a corresponding area. Further, the reference area may only be composed of a single reference pixel and the corresponding area may only be composed of a single corresponding pixel.

(Calculation of disparity)

As illustrated in FIG. 1, the stereo camera includes an imaging device 10a and an imaging device 10b, which are set parallel at the same height in the configuration of FIG. 1. The imaging device 10a and the imaging device 10b capture images of the same object to generate a reference image Ia and a comparison image Ib, respectively. In the configuration of FIG. 1, a point S on the object E in a three-dimensional space is captured at one position of the imaging device 10a and also at one position of the imaging device 10b, wherein these two positions of the imaging device 10a and the imaging device 10b are on the same horizontal line, which means that the point S is captured as a point Sa(X,y) in the reference image Ia and a point Sb(x,y) in the comparison image Ib. In this configuration, a disparity value $\Delta$ can be expressed by equation (1) below based on the point Sa(X,y) in the coordinates of the imaging device 10a and the point Sb(x,y) in the coordinates of the imaging device 10b.

$$\Delta = X - x \quad (1)$$

In the configuration of FIG. 1, the disparity value is expressed by $\Delta = \Delta a + \Delta b$, wherein $\Delta a$ is the distance between the point Sa(X,y) in the reference image Ia and the point of intersection of the normal line extending from the imaging lens 11a to the imaging plane, and $\Delta b$ is the distance between the point Sb(x,y) in the comparison image Ib and the point of intersection of the normal line extending from the imaging lens 11b to the imaging plane.

(Calculation of distance)

The distance Z between the imaging devices 10a/10b and the object E can be calculated or computed using the disparity value $\Delta$. Specifically, the distance Z is a distance from the plane including the focus position of the imaging lens 11a and the focus position of the imaging lens 11b to the point S on the object E. As illustrated in FIG. 1, the distance Z can be calculated by equation (2) below using the focal length "f" of the imaging lens 11a and the imaging lens 11b, the base line length "B" that is a length between the imaging lens 11a and the imaging lens 11b, and the disparity value $\Delta$.

$$Z = (B \times f)/\Delta \quad (2)$$

As indicated by this equation (2), the greater the disparity value $\Delta$, the smaller the distance Z, and the smaller the disparity value $\Delta$, the greater the distance Z. (SGM)

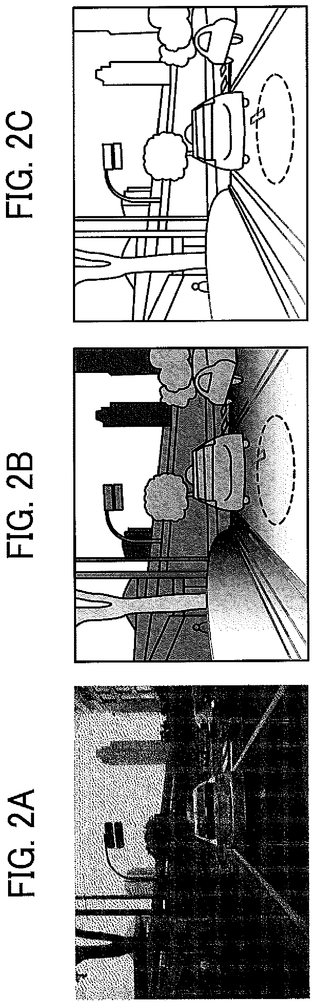

Referring to FIGs. 2 to 6, a description is given of a range-finding method using SGM. FIG. 2A is an example of a reference image, FIG. 2B is a conceptual image of a high density disparity image generated from FIG. 2A, and FIG. 2C is a conceptual image of an edge disparity image generated from FIG. 2A, in which the reference image is an image representing one or more objects based on luminance. The high density disparity image is an image derived from the reference image by applying SGM, and represents disparity values at each of coordinates in the reference image. The edge disparity image is an image derived by applying the conventional block matching method, and represents disparity values only at areas having relatively strong texture such as edges in the reference image.

SGM is a method that derives the above described disparity values suitably even if an object having weak texture is detected, and derives the high density disparity image illustrated in FIG. 2B based on the reference image of FIG. 2A. Further, when the block matching method is applied, the edge disparity image illustrated in FIG. 2C is derived based on the reference image of FIG. 2A. As can be understood by comparing the ovals enclosed by the broken lines in FIGs. 2B and 2C, the high density disparity image can express detailed information of an object having weak texture such as a road surface compared to the edge disparity image, and thereby a more detailed range-finding can be conducted based on the high density disparity image.

SGM does not derive a disparity value right after calculating the cost (e.g., dissimilarity), but SGM derives a disparity value by calculating the cost and then calculating a synthesis cost (i.e., synthesized dissimilarity), in which a disparity image (e.g., high density disparity image) expressing disparity values for almost all of the pixels is finally derived.

The block matching method calculates the cost same as SGM does. However, the block matching method does not calculate the synthesis cost, but derives disparity values only at areas having relatively strong texture such as edges in a captured image. Further, the method of deriving disparity values can be also the method of producing disparity values.

(Calculation of cost)

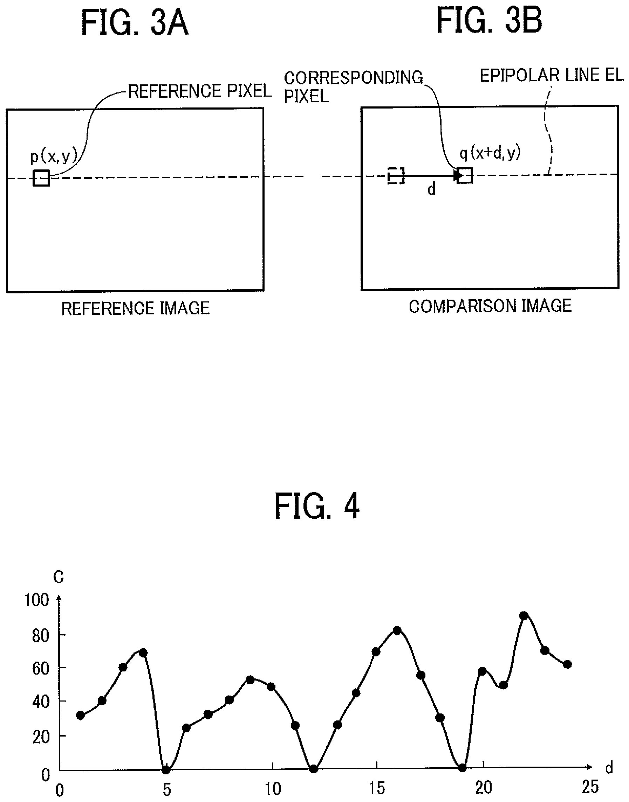

Referring to FIGs. 3 and 4, a description is given of a method of calculating the cost C(p,d). FIG. 3A is a conceptual diagram illustrating a reference pixel in a reference image, and FIG. 3B is a conceptual diagram for explaining calculating the cost by successively shifting candidate corresponding pixels in a comparison image relative to the reference pixel shown in FIG. 3A. FIG. 4 is a graph of a cost profile plotting costs with respect to shift values. In this configuration, the corresponding pixel is a pixel in the comparison image that is the most similar, for example, in luminance value to the reference pixel in the reference image. In the following description, it is assumed that C(p,d) is equivalent to C(x,y,d), as p represents (x, y).

As illustrated in FIG. 3A, a reference pixel p(x,y) is set in the reference image. As illustrated in FIG. 3B, a plurality of candidate corresponding pixels q(x+d,y) that may correspond to the reference pixel p(x,y) are set on the epipolar line EL in the comparison image, wherein the epipolar line EL is set in the reference image and the comparison image as illustrated in FIGs. 3A and 3B. Based on luminance of the reference pixel p(x,y) and luminance of the plurality of candidate corresponding pixels q(x+d,y), the cost C(p,d) of each of the candidate corresponding pixels q(x+d,y) with respect to the reference pixel p(x,y) is calculated. In this description, "d" corresponds to a shift value of each of the candidate corresponding pixels "q" with respect to the reference pixel "p," and the shift value "d" is expressed, for example, in units of pixels. That is, in the example case of FIG. 3 (FIGs. 3A and 3B), the cost C(p,d), which indicates a level of dissimilarity between luminance of the candidate corresponding pixels q(x+d,y) and luminance of the reference pixel p(x,y), is calculated by successively shifting the candidate corresponding pixels q(x+d,y) one pixel by one pixel in a pre-set range or region (e.g., 0 < d < 25). The cost C can be calculated by applying any known method such as SAD (Sum of Absolute Difference) when the cost C represents a level of dissimilarity.

As illustrated in the graph of FIG. 4, the calculated costs C(p,d) can be expressed as a cost profile by plotting the calculated costs C with respect to the shift values "d." In the graph of FIG. 4, since the cost C becomes zero (0) at the shift values d = 5, 12, 19, the minimum value of the cost C cannot be identified from the graph of FIG. 4. Therefore, in a case of an object having weak texture, it is difficult to identify the minimum value of the cost C.

(Calculation of synthesis cost)

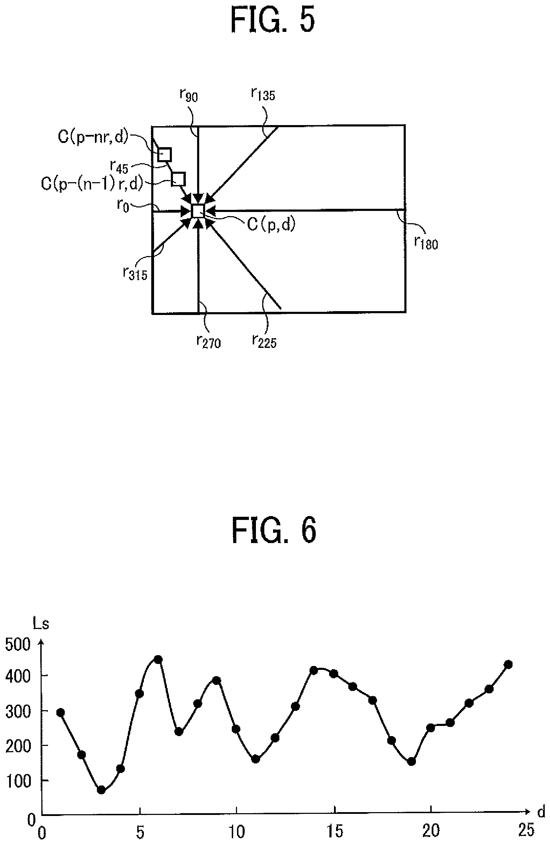

Referring to FIGs. 5 and 6, a description is given of a method of calculating a synthesis cost Ls(p,d). FIG. 5 is a conceptual diagram for describing calculation of the synthesis cost Ls. FIG. 6 is a graph of a synthesis cost profile plotting synthesis costs with respect to disparity values. The synthesis cost Ls(p,d) is obtained by calculating the cost C(p,d) for one reference pixel p(x,y), by calculating cost C for other pixels p'(x',y') used as other reference pixels existing at positions surrounding the one reference pixel p(x,y) such as from near to far positions with respect to the reference pixel p(x,y), and by aggregating or converging the cost C(p,d) for the one reference pixel p(x,y) and the costs C for other reference pixels p'(x',y') as the synthesis cost Ls(p,d).

A description is given of a method of calculating the synthesis cost Ls(p,d) in detail. To calculate the synthesis cost Ls(p,d), at first, it is necessary to calculate a directional path cost Lr(p,d). Equation (3) is used for calculating the directional path cost Lr(p,d), and equation (4) is used for calculating the synthesis cost Ls.

$$Lr(p,d) = C(p,d) + \min\{(Lr(p-r,d), Lr(p-r,d-1) + P1, Lr(p-r,d+1) + P1, Lrmin(p-r) + P2\}$$

$$(3)$$

In the equation (3), "r" indicates a direction vector along the aggregated direction having two directional components such as the x direction component and the y direction component. The term min{} is a function for obtaining the minimum value. Lrmin(p-r) indicates the minimum value of Lr(p-r,d) when the shift value "d" is changed in the coordinates where "p" is shifted by one pixel in "r" direction. It should be noted that Lr is recurrently applied as expressed in the equation (3). P1 and P2 are fixed parameters that can be set by experiments in advance such that the disparity values $\Delta$ of adjacent reference pixels on the direction path are likely to be continuous. For example, P1 = 48 and P2 = 96.

As expressed in the equation (3), Lr(p,d) for the reference pixel p(x,y) can be obtained by adding the minimum value of the directional path cost Lr of pixels existing along "r" direction from the reference pixel p(x,y) illustrated in FIG. 5 to the cost C of the reference pixel p(x,y). As described above, Lr is obtained for each one of pixels existing along "r" direction one by one starting from the farthest end pixel, which is the farthest from the reference pixel p(x,y). Based on the Lr obtained for the pixels existing along "r" direction, the Lr(p,d) of the pixel p(x,y) along "r" direction can be obtained.

Then, a plurality of directional path costs Lr can be obtained along a plurality of directions. For example, as illustrated in FIG. 5, a plurality of directional path costs such as $Lr_0$, $Lr_{45}$, $Lr_{90}$, $Lr_{135}$, $Lr_{180}$, $Lr_{225}$, $Lr_{270}$, $Lr_{315}$ is obtained in eight directions, Then, the synthesis cost Ls is finally obtained by applying the equation (4) to the plurality of directional path costs Lr.

$$Ls(p,d) = \sum_8 Lr$$

$$(4)$$

The calculated synthesis costs Ls(p,d) can be expressed as a graph of a synthesis cost profile by plotting the synthesis costs Ls(p,d) with respect to the shift values "d" as illustrated in FIG. 6. In the example case of FIG. 6, the synthesis cost Ls becomes the minimum value or the smallest value when the shift value d = 3, and thereby the disparity value $\Delta$ is derived as $\Delta$ = 3. Although "r" is set to eight in the above description, "r" is not limited hereto. For example, the eight directions can be further divided into sixteen directions (two times of eight directions), twenty four directions (three times of eight directions), and so on.

In the above description, the synthesis cost Ls is calculated by applying the equation (4) that totals the directional path costs Lr for all of the directional paths "r" calculated by the equation (3), but the synthesis cost Ls is not limited hereto. For example, the directional path cost Lr in a single directional path can be used as the synthesis cost Ls, or the directional path costs Lr in two or more directional paths can be synthesized as the synthesis cost Ls.

Although the cost C is used as an indicator of "dissimilarity" in the above description, the cost C can be used as an indicator of "similarity" that is the opposite of "dissimilarity." When the cost C is used as an indicator of similarity, a known method such as Normalized Cross Correlation (NCC) can be used as the method of calculating the cost C, in which the disparity value $\Delta$ at which the synthesis cost Ls becomes the "maximum" is derived instead of using the disparity value $\Delta$ at which the synthesis cost Ls becomes the "minimum." In this description, the similarity and dissimilarity may be collectively referred to as "matching level" of the cost.

(Description of example embodiments)

A description is given of a specific configuration of one or more example embodiments with reference to the drawings, in which an object recognition system 1 mounted on a vehicle such as an automobile is described as one example. Other than automobiles, the object recognition system 1 is mountable on vehicles such as motor bicycles, bicycles, wheelchairs, agricultural tractors, construction machines, or the like. Further, the object recognition system 1 is mountable on vehicles, which is an example of movable apparatuses, and also on robots, which is another example of movable apparatuses. The robots are not limited to the movable apparatuses but can be fixed apparatuses such as industrial robots fixed at a given place such as robots for factory automation (FA). Further, the fixed apparatuses may not be limited to the robots, but can be other apparatuses such as security monitoring cameras or the like.

(Configuration of example embodiment)

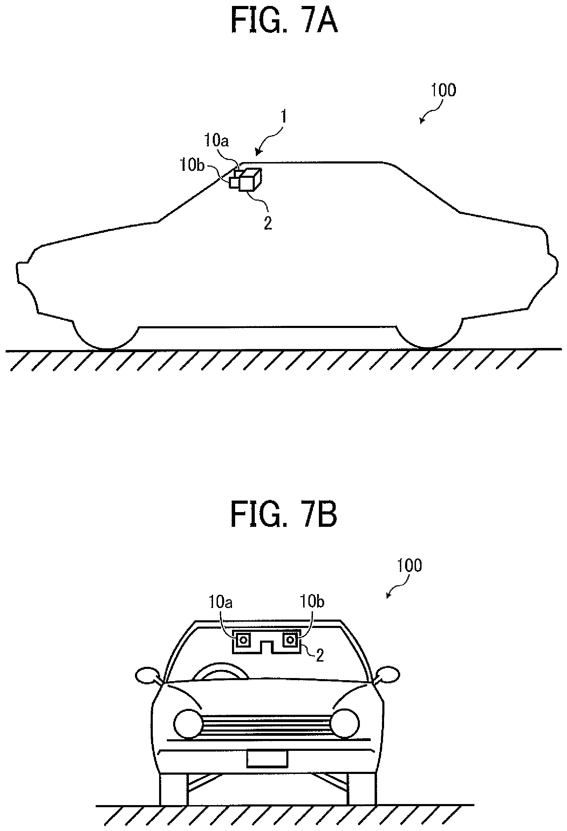

A description is given of a configuration of the object recognition system 1 according to one or more example embodiments with reference to FIGs. 7 to 9.

(External configuration)

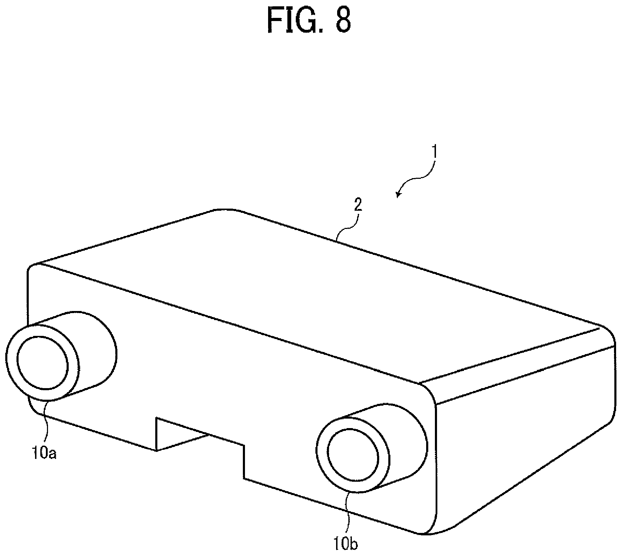

With reference to FIGs. 7 and 8, a description is given of an external configuration of the object recognition system 1. FIG. 7A is a schematic side view of a vehicle 100 such as an automobile mounting the object recognition system 1, and FIG. 7B is a schematic front view of the vehicle 100 of FIG. 7A. FIG. 8 is a schematic perspective view of the object recognition system 1.

As illustrated in FIGs. 7A and 7B, the object recognition system 1 includes, for example, an imaging device 10a and an imaging device 10b. The imaging device 10a and the imaging device 10b can be disposed at least at one position to capture images of scenes ahead of the vehicle 100.

Further, as illustrated in FIG. 8, the object recognition system 1 includes, for example, a main body 2 and a pair of the imaging device 10a and imaging device 10b, shaped into a cylindrical shape, provided on the main body 2. Although the object recognition system 1 is disposed at the position shown in FIG. 7, the position to dispose the object recognition system 1 is not limited hereto. The object recognition system 1 can be disposed at any position on the apparatus depending on fields of application of the apparatus.

(Overall hardware configuration)

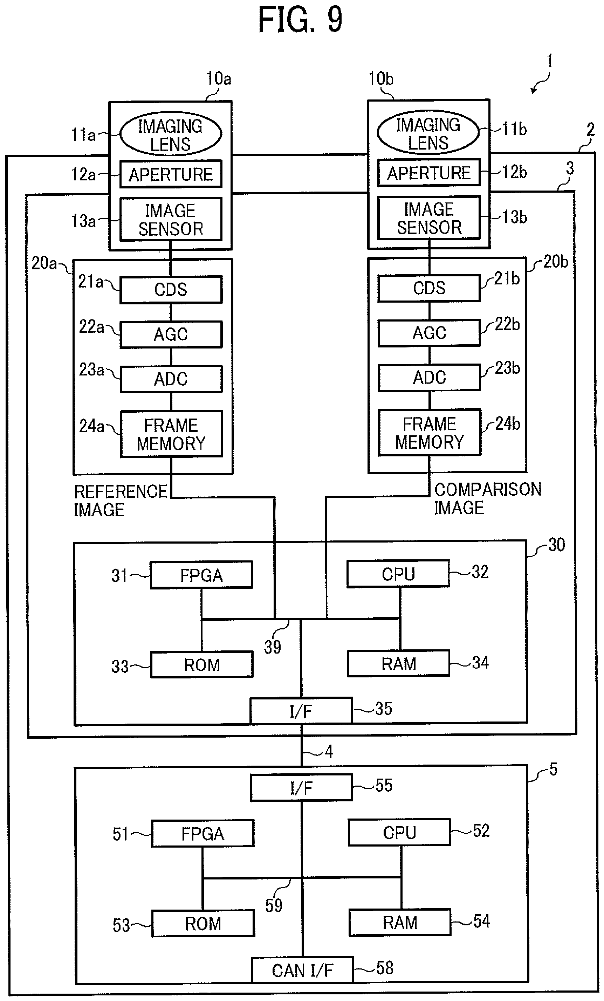

Referring to FIG. 9, a description is given of an overall hardware configuration of the object recognition system 1. FIG. 9 is a block diagram example of a hardware configuration of the object recognition system 1.

As illustrated in FIG. 9, the object recognition system 1 includes, for example, a disparity deriving apparatus 3, and an object recognition apparatus 5 in the main body 2. The disparity deriving apparatus 3 derives a disparity value $\Delta$ indicating disparity of the object E based on a plurality of images obtained by imaging the object E, and outputs a high density disparity image indicating the disparity value $\Delta$ for each pixel in the images. The object recognition apparatus 5 performs processing such as range-finding between the imaging devices 10a/10b and the object E based on a high density disparity image output from the disparity deriving apparatus 3.

A description is given of a hardware configuration of the disparity deriving apparatus 3. As illustrated in FIG. 9, the disparity deriving apparatus 3 includes, for example, the imaging device 10a, the imaging device 10b, a signal conversion device 20a, a signal conversion device 20b, and an image processing device 30.

The imaging device 10a includes, for example, an imaging lens 11a, an aperture 12a, and an image sensor 13a to generate an analog signal for reproducing an image by capturing images of scenes ahead of the vehicle 100 (FIG. 7). The imaging lens 1 la is an optical element for diffracting light passing through the imaging lens 11a to form an image of an object on the image sensor 13a. The aperture 12a cuts off a part of the light passing through the imaging lens 11a to adjust the quantity of light input to the image sensor 13a to be described later. The image sensor 13a is, for example, a semiconductor device that converts the light input from the imaging lens 11a and the aperture 12a into an electrical analog image signal, and can be implemented, for example, as a charge coupled device (CCD) or a complementary metal oxide semiconductor (CMOS). The imaging device 10b has the same configuration as the imaging device 10a, and thereby a description of the imaging device 10b is omitted. The imaging lens 11a and the imaging lens 11b are installed such that their respective lens faces are on the same plane.

The signal conversion device 20a includes, for example, a correlated double sampling (CDS) 21a, an auto gain control (AGC) 22a, an analog digital converter (ADC) 23a, and a frame memory 24a to convert the analog signal for reproducing the captured image into image data in digital format. The CDS 21a removes noise from the analog image signal converted by the image sensor 13a by conducting correlated double sampling. The AGC 22a performs gain control for controlling the intensity of the analog image signal removed with the noise by the CDS 21a. The ADC 23a converts the analog image signal, gain-controlled by the AGC 22a, into image data in digital format. The frame memory 24a stores the image data converted by the ADC 23a.

Similarly, the signal conversion device 20b includes a CDS 21b, an AGC 22b, an ADC 23b, and a frame memory 24b to convert the analog image signal input from the imaging device 10b. The CDS 21b, AGC 22b, ADC 23b, and frame memory 24b respectively have the same configuration as the CDS 21a, AGC 22a, ADC 23 a, and frame memory 24a, and thereby a description thereof is omitted.

Further, the image processing device 30 is a device for processing the image data converted by the signal conversion device 20a and the signal conversion device 20b. The image processing device 30 includes, for example, a field programmable gate array (FPGA) 31, a central processing unit (CPU) 32, a read only memory (ROM) 33, a random access memory (RAM) 34, an interface (I/F) 35, and a bus line 39 such as an address bus and a data bus for electrically connecting the components 31 to 35 as illustrated in FIG. 9.

The FPGA 31 is an integrated circuit that performs the process of calculating a disparity value $\Delta$ in the image represented by image data based on an instruction from the CPU 32. The CPU 32 controls entire operation performed by the disparity deriving apparatus 3. The ROM 33 stores an image processing program executable by the CPU 32 to control entire operation performed by the disparity deriving apparatus 3. The RAM 34 is used as a working area for the CPU 32. The I/F 35 is an interface for communicating with an I/F 55 of the object recognition apparatus 5, to be described later, through the bus line 4 such as an address bus and a data bus.

A description is given of a hardware configuration of the object recognition apparatus 5. As illustrated in FIG. 9, the object recognition apparatus 5 includes, for example, an FPGA 51, a CPU 52, a ROM 53, a RAM 54, an I/F 55, a controller area network (CAN) I/F 58, and a bus line 59 such as an address bus and a data bus for electrically connecting the components 51 to 55 and 58 as illustrated in FIG. 9.

The FPGA 51, CPU 52, ROM 53, RAM 54, I/F 55, and bus line 59 respectively have the same configuration as the FPGA 31, CPU 32, ROM 33, RAM 34, I/F 35, and bus line 39 in the image processing device 30, and thereby a description thereof is omitted. The I/F 55 is an interface for communicating with the I/F 35 of the image processing device 30 through the bus line 4. The ROM 53 stores an object recognition program executable by the CPU 52 to control entire operation performed by the object recognition apparatus 5. The CAN I/F 58 is an interface for communicating with an external controller or the like, and can be connected to, for example, a controller area network (CAN) of automobiles.

In the above described configuration, when a high density disparity image is transmitted from the I/F 35 of the image processing device 30 to the object recognition apparatus 5 through the bus line 4, the FPGA 51 calculates the distance Z between the imaging devices 10a/10b and the object E based on an instruction from the CPU 52 in the object recognition apparatus 5. Further, the FPGA 31 can calculate the distance Z under an instruction from the CPU 32 of the image processing device 30 instead of calculating the distance Z by the FPGA 51 under an instruction from the CPU 52 in the object recognition apparatus 5.

Further, as to the above described example embodiment, the two imaging devices 10a and 10b are used but not limited hereto. For example, one imaging device can be used, in which an imaging area is separated into two areas on one image sensor to capture the reference image and the comparison image of the object E. Further, the above described programs may be stored in a computer-readable storage medium or carrier medium with an installable or executable file format for distribution of programs. The storage medium or carrier medium is, for example, a compact disc read only memory (CD-ROM), a secure digital (SD) memory card or the like, but not limited thereto.

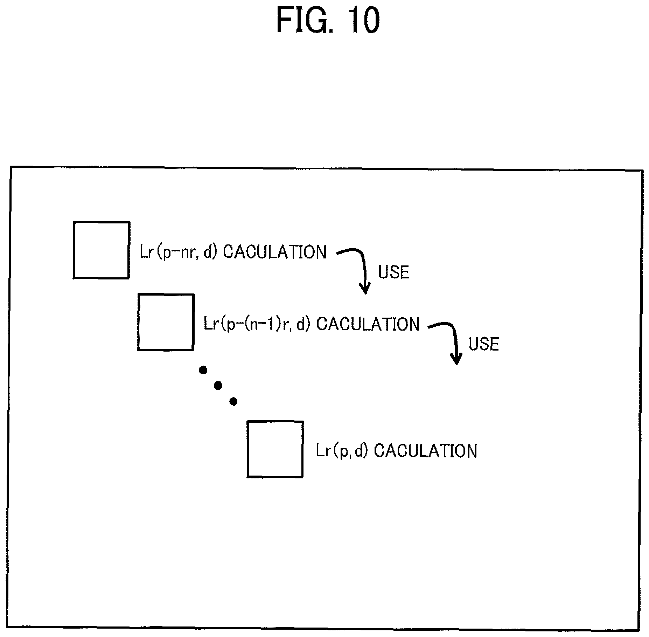

A description is given of a concept of recurrent computing by applying the equation (3) with reference to FIG. 10. The directional path cost Lr(p,d) for the reference pixel p(x,y) can be obtained as illustrated in FIG. 10. Specifically, at first, the directional path cost Lr(p-nr,d) is calculated for a pixel at a position, which is the farthest from the reference pixel p(x,y), by applying the equation (3). Then, the directional path cost Lr(p-(n-1)r,d) is calculated at a next pixel on the same "r" direction and at a position closer to the reference pixel p(x,y) by applying the equation (3) using the calculated directional path cost Lr(p-nr,d). Then, the directional path cost Lr is calculated at a further next pixel on the same "r" direction and at a position further closer to the reference pixel p(x,y) by applying the equation (3) using the calculated directional path cost Lr(p-(n-1)r,d). This calculation process using the previous calculation result is repeated for each one of pixels on the same "r" direction to calculate the directional path cost Lr(p,d) for the reference pixel p(x,y) finally. The equation (3) is used to derive the directional path cost Lr(p,d) based on the cost C(p,d) and the directional path cost Lr(p-r,d). Since the directional path cost Lr is derived from the cost C(p,d), it can be understood that the equation (3) is derived from the cost C(p,d) and the cost C(p-nr,d).

(Hardware configuration of main part)

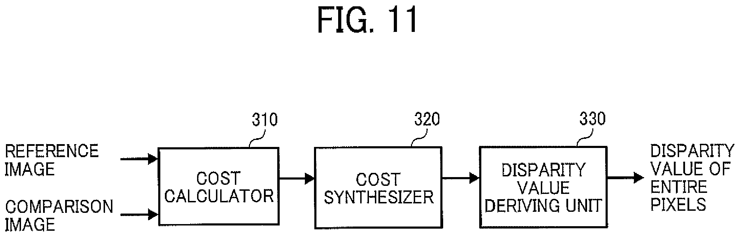

Referring to FIGs. 3, 9 and 11, a description is given of a hardware configuration of a main part of the disparity deriving apparatus 3. FIG. 11 is a schematic hardware configuration of the main part of the disparity deriving apparatus 3, which corresponds to functional units of the FPGA 31 (FIG. 9).

As illustrated in FIG. 11, the FPGA 31 (FIG. 9) includes, for example, a cost calculator 310 as a calculator, a cost synthesizer 320 as a synthesizer, and a disparity value deriving unit 330 as a deriving unit. Although these units are part of the circuitry of the FPGA 31, processing that can be performed by these units can be performed by executing the above mentioned program.

As illustrated in FIG. 3, the cost calculator 310 calculates and outputs the costs C of candidate corresponding pixels q(x+d,y) in the comparison image (FIG. 3B) with respect to a corresponding reference pixel p(x,y) in a reference image (FIG. 3A). Specifically, the cost calculator 310 calculates and outputs the costs C of the candidate corresponding pixels q(x+d,y) in the comparison image, which may correspond to the reference pixel p(x,y) in the reference image, based on a difference of luminance of the reference pixel p(x,y) in the reference image and luminance of the candidate corresponding pixels q(x+d,y) in the comparison image by shifting positions of the candidate corresponding pixels, identified by corresponding shift values d, on the epipolar line EL extended from the reference pixel p(x,y) in the reference image to the comparison image. Further, the cost calculator 310 can be configured to retain or store each of the calculated costs C in a memory.

For each of the shift values "d," the cost synthesizer 320 synthesizes the costs C of candidate corresponding pixels q(x+d,y) corresponding to one reference pixel p(x,y) output by the cost calculator 310, and the costs C of candidate corresponding pixels q'(x'+d,y') corresponding to other reference pixel p'(x',y') output by the cost calculator 310, and outputs the synthesized costs as the synthesis cost Ls.

In this configuration, the synthesizing process is conducted by calculating the directional path costs Lr' based on the costs C using the equation (3'), instead of the equation (3), and then adding the directional path costs Lr' for each of the directions using the equation (4') to calculate the synthesis cost Ls' finally.

$$Lr'(p,d)=C(p,d)+Ad \times \min \{(Lr(p\text{-}r,d), Lr(p\text{-}r,d\text{-}1) + P1, Lr(p\text{-}r,d+1) + P1, Lrmin(p\text{-}r) + P2\} \ (0<Ad<1) \qquad (3')$$

Since the equation (3') is almost same as the equation (3) except for multiplying a coefficient "Ad" satisfying a condition of "0 < Ad < 1," the explanation of each terms of the equation (3') is omitted. A description is given of a recurrent computing by applying the equation (3').

Specifically, by applying the equation (3') to the cost C calculated by the cost calculator 310, the cost synthesizer 320 synthesizes the costs C of each of candidate corresponding pixels with respect to a first reference pixel multiplied by a first weight, and the costs C of each of candidate corresponding pixels with respect to a second reference pixel multiplied by a second weight, wherein the second weight (e.g., multiplication of 0.9) is smaller than the first weight (e.g., multiplication of one), to calculate the directional path cost Lr' for a directional path "r" on the reference image, and then totals the directional path costs Lr' for each of the directional paths "r" to calculate the synthesis cost Ls' for each of the shift values.

Further, the cost synthesizer 320 synthesizes the cost C of the first reference pixel multiplied by the first weight, the cost C of the second reference pixel multiplied by the second weight, and a cost C of a third reference pixel multiplied by a third weight, in which the third weight (e.g., multiplication of 0.81) is smaller than the second weight (e.g., multiplication of 0.9), and a distance of the third reference pixel from the first reference pixel is far compared to a distance of the second reference pixel from the first reference pixel on the directional path where the first and second reference pixels exist in the reference image.

In this case, if the first weight is set one (1), the computation load can be reduced. Further, as indicated in the equation (3'), by multiplying a coefficient of synthesis level such as weight coefficient "Ad" to the term of recurrent computing, the number of multiplying times of the weight coefficient "Ad" for the recurrent computing becomes greater as pixels are farther from the first reference pixel on the directional path. With this configuration, the synthesis level can be reduced as pixels are farther from the first reference pixel on the directional path by using the recurrent computing. With this configuration, when the cost synthesizer 320 is configured as a hardware, the circuit size can be reduced.

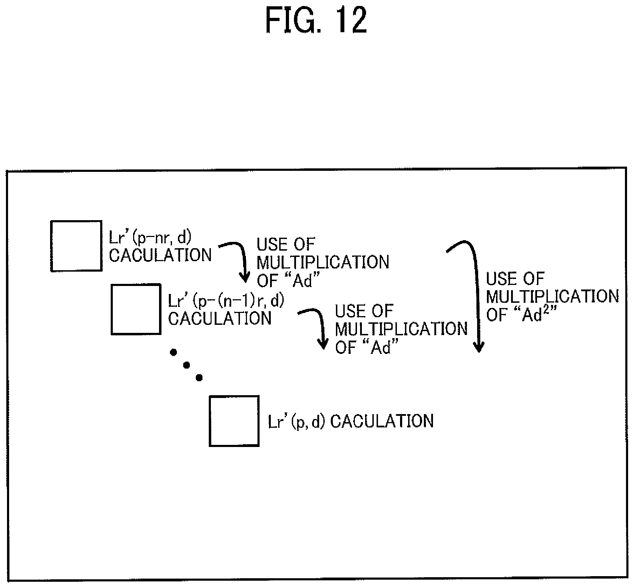

A description is given of the processing performed by the cost synthesizer 320 with reference to FIG. 12 which illustrates the present invention. As illustrated in FIG. 12, a calculation using the equation (3') is conducted to pixels along one or more directional paths extending from the reference pixel p(x,y) to obtain the directional path cost Lr'(p,d) for the reference pixel p(x,y). At first, a calculation using the equation (3') is conducted at a pixel (first pixel) farthest from the reference pixel p(x,y) to calculate the directional path cost Lr'(p-nr,d).

Then, a calculation result that is the directional path cost Lr'(p-nr,d) is multiplied by the weight coefficient "Ad" (0 < Ad < 1) as a multiplied result, and a next calculation using the equation (3') is conducted at a next pixel (second pixel), which is closer to the reference pixel p(x,y) compared to the first pixel on the same directional path "r" based on the multiplied result to calculate the directional path cost Lr'(p-(n-1)r,d).

Then, a further next calculation using the equation (3') is conducted at a further next pixel (third pixel) based on the calculation result of the first pixel multiplied by the weight coefficient "Ad" for two times (i.e., $Ad^2$). By repeating this calculation process that uses the previous calculation result multiplied by the weight coefficient "Ad" for a next calculation, the directional path cost Lr'(p,d) for the reference pixel (x,y) can be obtained finally.

In the above described recurrent computing, the number of multiplication times of the weight coefficient "Ad" (0 < Ad < 1) increases as pixels are farther from the reference pixel "p." Therefore, even if one pixel, which is far from the reference pixel "p," has a calculated cost C greatly different from the costs C of other pixels, an effect of the one pixel to the directional path cost Lr' for the reference pixel "p" becomes smaller because the directional path cost Lr' of the one pixel can be set smaller by conducting the above described recurrent computing,.

When the equation (3') is applied, equation (4') below is applied to calculate the synthesis cost Ls' instead of the equation (4).

$$Ls'(p,d) = \Sigma Lr' \qquad (4')$$

Further, the disparity value deriving unit 330 derives a shift value "d" corresponding to the smallest synthesis cost Ls, output by the cost synthesizer 320, as the disparity value Δ.

Further, the weight coefficient Ad can be stored in the RAM 34, and a value of the weight coefficient Ad is changed by an input operation by a user, in which a value of the weight coefficient Ad is set differently for each of the directional paths "r" shown in FIG. 5.

Further, the weight coefficient Ad set for each of the directional paths "r" can be changed for each frame data of an image captured by the imaging devices 10a and 10b. For example, as to a first frame data of an image, to accurately derive the disparity value $\Delta$ for a road face where a change in the horizontal direction does not appear clearly, the equation (3') is applied only to the directional paths of $r_0$ and $r_{180}$, and the equation (3) is applied to other directional paths. Then, as to a next frame data of the image, to accurately derive the disparity value $\Delta$ for a road sign and/or a car where a change in the vertical direction does not appear clearly, the equation (3') is applied only to the directional paths $r_{90}$ and $r_{270}$, and the equation (3) is applied for other directional paths.

(Operation of example embodiment)

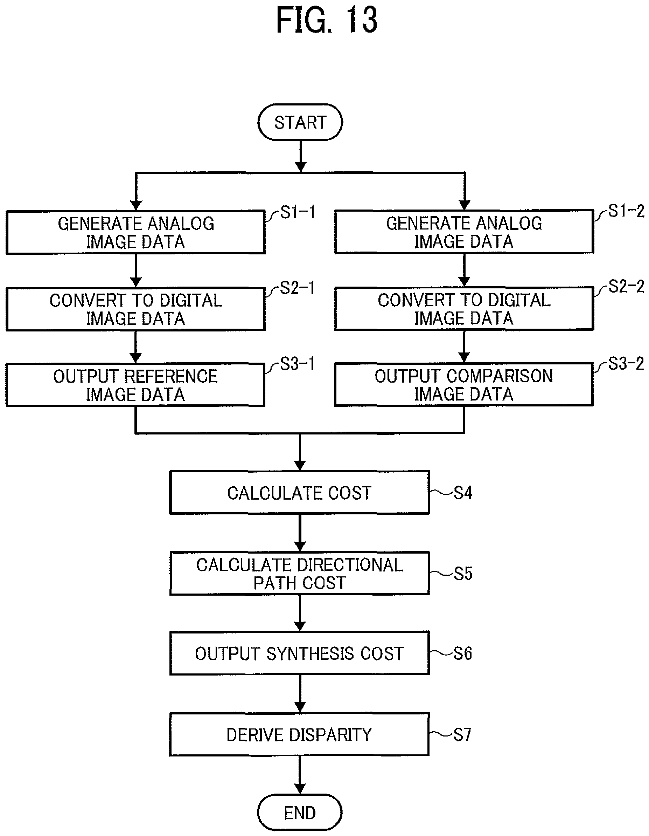

Referring to FIGs. 13 to 16, an operation according to the one or more example embodiments is described. Specifically, a method of deriving the disparity value $\Delta$ is described with reference to FIGs. 13 to 16.

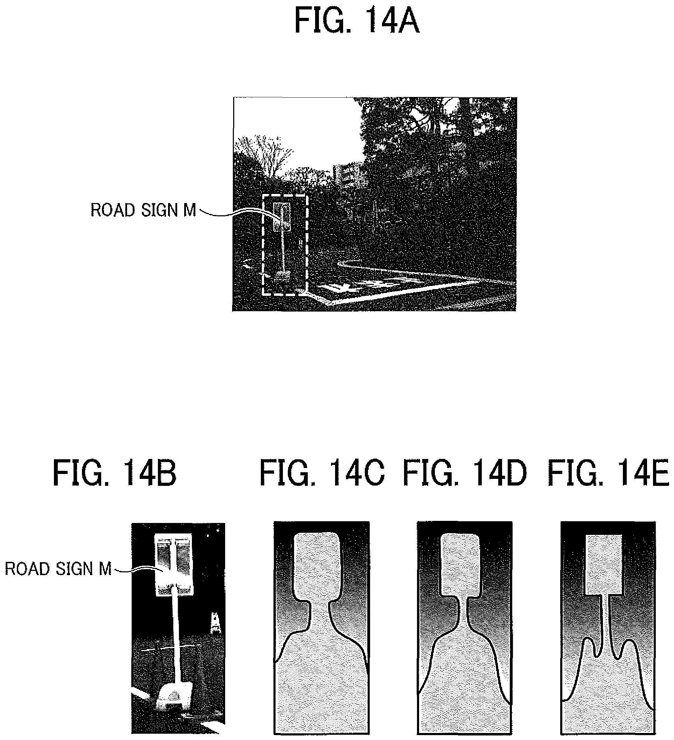

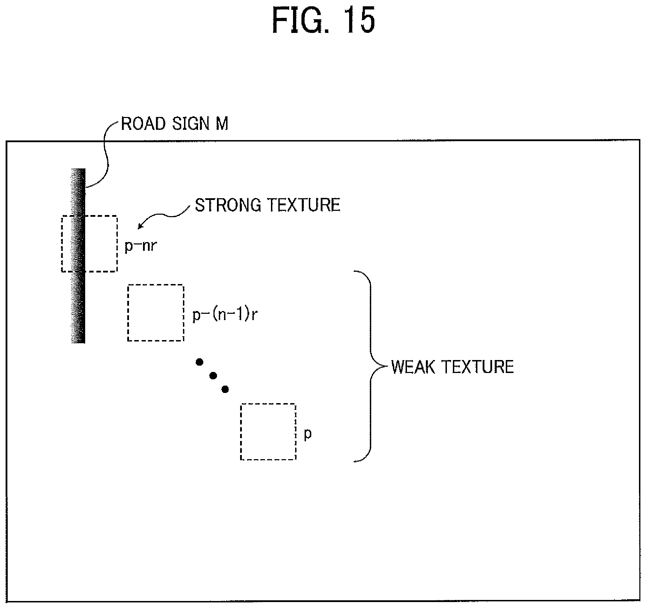

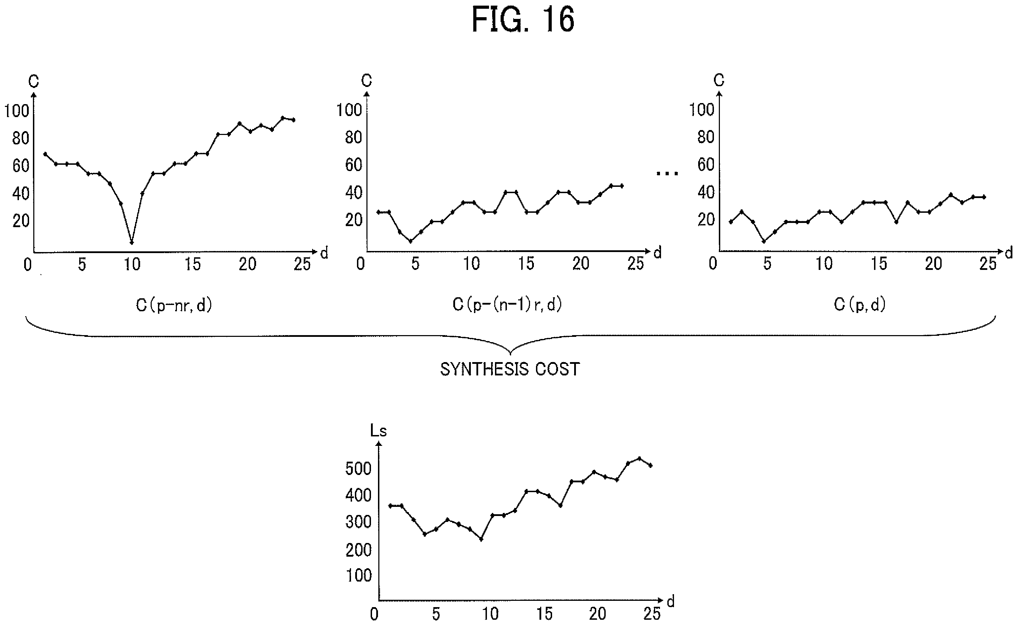

FIG. 13 is a flowchart showing the steps of a process of disparity computation according to one example embodiment. FIG. 14A is an example of a reference image. FIG. 14B is a part of the reference image of FIG. 14A. FIG. 14B is a high density disparity image generated by applying the equation (3) to the reference image of FIG. 14B. FIG. 14D is a high density disparity image generated by applying the equation (3') to the reference image of FIG. 14B. FIG. 14E is another high density disparity image generated by applying the equation (3') to the reference image of FIG. 14B. FIG. 15 is a schematic view of a reference image, which is expanded partially. FIG. 16 illustrates examples of cost profiles with respect shift values, and an example of a synthesis cost profile with respect shift values in the reference image of FIG. 15.

Hereinafter, a description is given of a process of deriving the synthesis cost Ls' on the reference image shown in FIG. 14A, in which a part of the image of FIG. 14A is shown in FIG. 14B and referred for the simplification of the description.

At first, the imaging device 10a (FIG. 9) generates analog image data by capturing an image of the object E (step S1-1). Similarly, the imaging device 10b generates analog image data by capturing an image of the object E (step S1-2).

Then, the signal conversion device 20a converts the analog image data into digital image data (step S2-1). Similarly, the signal conversion device 20b converts the analog image data into digital image data (step S2-2).

Then, the signal conversion device 20a outputs the digital image data, converted at step S2-1, to the FPGA 31 of the image processing device 30 as data of a reference image (step S3-1), wherein an example of the reference image is shown in FIG. 2A. Similarly, the signal conversion device 20b outputs the digital image data, converted at step S2-2, to the FPGA 31 of the image processing device 30 as data of a comparison image (step S3-2). Since the comparison image, which is the image captured by the imaging device 10b, has no significant difference from the reference image shown in FIG. 2A, an example view of the comparison image is omitted.

Then, the cost calculator 310 (FIG. 11) calculates the costs C for each one of the shift values "d" based on the data of the reference image and the data of the comparison image (step S4).

Then, the cost synthesizer 320 (FIG. 11) calculates the directional path cost Lr' by applying the equation (3') (step S5). Further, the cost synthesizer 320 calculates the synthesis cost Ls' by applying the equation (4') (step S6).

For example, a boundary portion of a road sign M and a background scene (FIG. 14B) has strong texture while a portion of the background scene has weak texture as illustrated in FIG. 15. Therefore, as illustrated in FIG. 16, a very small cost C(p-nr,d) exists at a pixel (p-nr), corresponding to the boundary portion of the road sign M and the background scene, which is at the shift value d = 10.

Therefore, if the synthesis cost Ls is calculated at a position of the pixel "p" by applying the equations (3) and (4) in the case illustrated in FIG. 15, even if the position of the pixel (p-nr) is far from the position of pixel "p," the very small cost C affects other costs C, with which, for example, the high density disparity image shown in FIG. 14C is generated.

By contrast, when the synthesis cost Ls' is calculated at a position of the pixel "p" by applying the equations (3') and (4'), the number "N" of "Ad$^N$" (0 < Ad <1, N: natural number) increases as pixels are farther from the position of the pixel "p" as illustrated in FIG. 12, with which an effect of pixels at the farther positions to the deriving of the directional path cost Lr' at the pixel "p" can be reduced. Therefore, even if the very small cost C exists at a position far from the pixel "p," an effect of the very small cost C to the deriving of the directional path cost Lr' at the pixel "p" can be reduced, with which, for example, a high density disparity image shown in FIG. 14D can be generated. In this configuration, the high density disparity image shown in FIG. 14D can express an image having a shape or contour closer to a real object compared to the high density disparity image shown in FIG. 14C. The above mentioned very small cost C corresponds to a cost of strong texture.

Further, by changing a value of the weight coefficient Ad, an image having a shape further closer to the real object can be generated as illustrated in FIG. 14E. For example, FIG. 14D illustrates a high density disparity image when the weight coefficient Ad is 0.9, and FIG. 14E illustrates a high density disparity image when the weight coefficient Ad is 0.8. Therefore, the smaller the weight coefficient Ad, the closer the high density disparity image to the real object. In this example case of FIG. 14, the shape of the object in the image becomes smaller and sharp. However, if the weight coefficient Ad is set further smaller such as less than a given value (e.g., 0.7), a difference between the minimum value of Ls and a local minimum value (i.e., other than the minimum value of Ls) in the synthesis cost profile shown in FIG. 16 becomes too small, with which reliability of the derived disparity value $\Delta$ becomes lower.

Then, the disparity value deriving unit 330 derives the shift value "d" corresponding to the smallest synthesis cost Ls' output by the cost synthesizer 320 as the disparity value $\Delta$ (step S7). Then, the disparity value deriving unit 330 derives the disparity value $\Delta$ for all pixels, and outputs the disparity value $\Delta$ of all pixels finally.

(Effect of example embodiment)

As to the above described one or more example embodiments, when deriving the directional path cost Lr' at a position of pixel "p," even if a portion having a very small cost C (i.e., strong-texture portion) exists at a position far from the pixel "p" which may correspond to a weak texture portion, an effect of the portion having the very small cost C (i.e., strong texture portion) to the weak texture portion can be reduced effectively. Further, by changing a value of the weight coefficient Ad, the disparity image can be changed from the high density disparity image of FIG. 14D to the high density disparity image of FIG. 14E, which is further closer to the shape of a real object.

(Additional configuration of example embodiment)

Although the cost C is used as an indicator of "dissimilarity" in the above description, the cost C can be used as an indicator of "similarity" that is the opposite of "dissimilarity." When the cost C is used as an indicator of similarity, the disparity value $\Delta$ at which the cost C becomes the "maximum" is derived instead of using the disparity value $\Delta$ at which the cost C becomes the "minimum," and the disparity value $\Delta$ at which the synthesis cost Ls becomes the "maximum" is derived instead of using the disparity value $\Delta$ at which the synthesis cost Ls becomes the "minimum." In this description, the similarity and dissimilarity may be collectively referred to as "matching level" of the cost.

Further, as to the above equation (3'), the coefficient of C(p,d) is set "1," and the coefficient of min{ } is set "Ad," but not limited hereto. For example, the coefficient of C(p,d) can be set "Adl," and the coefficient ofmin{ } can be set "Ad2" with conditions of "Ad1 < Ad2, 0 < Ad1, 0 < Ad2. Further, in addition to the conditions of "Ad1 < Ad2, 0 < Ad1, 0 < Ad2," the coefficients "Ad1" and "Ad2" can be within a range of "$1 \leq$ Ad1 < Ad2," in which the above described first weight, second weight, and third weight can be set one or more (i.e., 100% or more).

(Configurations)

The above described example embodiments include at least following configurations.

(Configuration 1)

As to the above described example embodiments, the disparity deriving apparatus can derive disparity of an object using a reference image of the object captured by a first imaging device, and a comparison image of the object captured by a second imaging device, in which the disparity is indicated by a disparity value. The disparity deriving apparatus includes a calculator such as the cost calculator 310, a synthesizer such as the cost synthesizer 320, and a deriving unit such as the disparity value deriving unit 330. Further, the imaging device 10a is one example of the first imaging device, and the imaging device 10b is one example of the second imaging device.

The calculator calculates the costs between the reference image and the comparison image by computing a difference of luminance of a reference area (e.g., pixel) in the reference image, and luminance of each one of candidate corresponding areas (e.g., pixel) in the comparison image, corresponding to the reference area, by shifting positions of the candidate corresponding areas on the epipolar line EL in the comparison image, wherein the epipolar line EL is extended from the reference area in the reference image, in which the positions of the candidate corresponding areas can be identified based on the corresponding shift value, and the cost represents a level of dissimilarity or a level of similarity between luminance of the reference area and luminance of the candidate corresponding areas. For example, the calculator calculate costs between a first reference area in the reference image and each one of corresponding areas corresponding to the first reference area in a given region in the comparison image, and costs between a second reference area, surrounding the first reference area in the reference image, and each one of corresponding areas corresponding to the second reference area in a given region in the comparison image.

The synthesizer synthesizes the costs of the first reference area multiplied by the first weight, wherein the costs are calculated by the calculator, and the costs of the second reference area multiplied by the second weight smaller than the first weight, wherein the costs are calculated by the calculator, to calculate the directional path cost for one or more directional paths on the reference image, and then totals the directional path costs for each of the directional paths to calculate the synthesis costs for each of the shift values.

The deriving unit derives a disparity value of an object captured on the first reference area based on the synthesis costs synthesized by the synthesizer.

(Configuration 2)

As to the disparity deriving apparatus of the above configuration 1, the synthesizer synthesizes the costs of the first reference area multiplied by the first weight, the costs of the second reference area multiplied by the second weight smaller than the first weight, and costs of a third reference area multiplied by a third weight smaller than the second weight, as the synthesis costs, wherein a distance of the third reference area from the first reference area is far compared to a distance of the second reference area from the first reference area on the directional path including the first reference area and the second reference area.

(Configuration 3)

As to the disparity deriving apparatus of the above configuration 1, the synthesizer synthesizes the costs of the first reference area multiplied by the first weight, and the costs of the second reference multiplied by the second weight to calculate the directional path cost on the one or more directional paths on the reference image.

As to the above described one or more aspects of the present invention, even if an object having weak texture and an object having strong texture exist in the same scene, an effect of the disparity at the strong-texture object to disparity at the weak-texture object can be reduced. Therefore, disparity detection can be performed with high precision.

The present invention can be implemented in any convenient form, for example using dedicated hardware, or a mixture of dedicated hardware and software. The computer software can be provided to the programmable device using any storage medium or carrier medium for storing processor-readable code such as a floppy disk, a compact disk read only memory (CD-ROM), a compact disk rewritable (CD-RW), a digital versatile disk read only memory (DVD-ROM), DVD recording only/rewritable (DVD-R/RW), electrically erasable and programmable read only memory (EEPROM), erasable programmable read only memory (EPROM), a memory card or stick such as USB memory, a memory chip, a mini disk (MD), a magneto optical disc (MO), magnetic tape, a hard disk in a server, a solid state memory device or the like, but not limited these.

The carrier medium can compromise a transient carrier medium such as an electrical, optical, microwave, acoustic or radio frequency signal carrying the computer code. An example of such a transient medium is a TCP/IP signal carrying computer code over an IP network, such as the Internet. The carrier medium can also comprise a storage medium for storing processor readable code such as a floppy disk, hard disk, CD ROM, magnetic tape device or solid state memory device.

The computer software can be provided from a transmitting apparatus, which transmits signals, via a transmission medium such as public phone line, dedicated line, or other communication line, in which a part of the computer software is transmitted on the transmission medium, which means it is not required to transmit the entire data of the computer software is being transmitted on the transmission medium at one time. The signals includes data signals of the computer software and other data. The transmitting apparatus can transmit the computer software by transmitting data of the computer software continuously or intermittently.

The hardware platform includes any desired kind of hardware resources including, for example, a central processing unit (CPU), a random access memory (RAM), and a hard disk drive (HDD). The CPU may be implemented by any desired kind of any desired number of processors. The RAM may be implemented by any desired kind of volatile or non-volatile memory. The HDD may be implemented by any desired kind of non-volatile memory capable of storing a large amount of data. The hardware resources may additionally include an input device, an output device, or a network device, depending on the type of apparatus. Alternatively, the HDD may be provided outside of the apparatus as long as the HDD is accessible. In this example, the CPU, such as a cache memory of the CPU, and the RAM may function as a physical memory or a primary memory of the apparatus, while the HDD may function as a secondary memory of the apparatus.

In the above-described example embodiment, a computer can be used with a computer-readable program, described by object-oriented programming languages such as C++, Java (registered trademark), JavaScript (registered trademark), Perl, Ruby, or legacy programming languages such as machine language, assembler language to control functional units used for the apparatus or system. For example, a particular computer (e.g., personal computer, workstation) may control an information processing apparatus or an image processing apparatus such as image forming apparatus using a computer-readable program, which can execute the above-described processes or steps.

In the above-described embodiments, at least one or more of the units of apparatus can be implemented as hardware or as a combination of hardware/software combination. Each of the functions of the described embodiments may be implemented by one or more processing circuits. A processing circuit includes a programmed processor, as a processor includes circuitry. A processing circuit also includes devices such as an application specific integrated circuit (ASIC) and conventional circuit components arranged to perform the recited functions.

**Claims**

1. A disparity deriving apparatus (3) for deriving disparity of an object based on a reference image of the object captured at a first image capturing position and a comparison image of the object captured at a second image capturing position, the disparity deriving apparatus (3) comprising:

   a calculator (310) to calculate costs C(p,d) between a first reference area p(x,y) in the reference image and each one of corresponding areas q(x+d, y) corresponding to the first reference area p(x,y) in a given region in the comparison image, and costs between second reference area p'(x',y'), surrounding the first reference area p(x,y) in the reference image, and each one of corresponding areas q'(x'+d, y') corresponding to the second reference area p'(x',y') in a given region in the comparison image;
   a synthesizer (320) to synthesize the costs of the first reference area p(x, y) and the costs of the second reference area p'(x',y') as synthesis costs Ls(p,d), wherein the synthesis cost Ls(p,d) is obtained by using the Semi-Global Matching method and the equation Ls(p,d)=ΣLr(p,d),
   wherein a directional path cost Lr(p,d) is calculated as Lr(p,d) = C(p,d) + Ad x min {(Lr(p-r,d), Lr(p-r,d-1) + P1, Lr(p-r,d+1) + P1, Lrmin(p-r) + P2}, where 0 < Ad < 1, "r" indicates a direction vector along an aggregated direction having two directional components such as the x direction component and the y direction component, the term min{} is a function for obtaining the minimum value, Lrmin(p-r) indicates the minimum value of Lr(p-r,d) when the shift value "d" is changed in the coordinates where "p" is shifted in "r" direction, and P1 and P2 are fixed parameters that are set in advance; and
   a deriving unit (330) to derive a certain shift value d as a disparity value of an object captured on the first reference area p(x, y) based on the synthesis costs Ls(p,d) synthesized by the synthesizer (320),
   **characterized in that**
   the weight coefficient Ad is changed by an input operation by a user in which a value of the weight coefficient is set differently for each directional path for each frame data in the images.

2. The disparity deriving apparatus (3) of claim 1, wherein a first weight and a second weight set for each of the directional paths are changeable for each of the directional paths with a condition that the second weight is smaller than the first weight.

3. The disparity deriving apparatus (3) of claim 1 or claim 2, wherein a first weight and a second weight set for each of the directional paths are changeable for each of frame data of the captured reference image with a condition that the second weight is smaller than the first weight.

4. A movable (100) apparatus comprising:
   the disparity deriving apparatus (3) of any one of claims 1 to 3.

5. The movable apparatus (100) of claim 4, wherein the movable apparatus is one of a vehicle and a robot.

6. The movable apparatus (100) of claim 4, wherein the moveable apparatus is a fixed industrial robot

7. A computer-implemented method of deriving disparity of an object based on a reference image of the object captured at a first image capturing position and a comparison image of the object captured at a second image capturing position, the method comprising the steps of:

   calculating costs C(p,d) between a first reference area p(x,y) in the reference image and each one of corresponding areas q(x+d, y) corresponding to the first reference p (x,y) in a given region in the comparison image, and costs between second reference area p'(x',y'), surrounding the first reference area p(x,y) in the reference image, and each one of corresponding areas q'(x'+d, y') corresponding to the second reference area p'(x',y') in a given region in the comparison image;
   synthesizing the costs of the first reference area p(x,y) and the cost of the second reference area p'(x',y') as synthesis costs Ls(p,d,), wherein the synthesis cost Ls(p,d) is obtained using the Semi-Global Matching method and the equation Ls(p,d)=ΣLr(p,d),

wherein a directional path cost Lr(p,d) is calculated as Lr(p,d) = C(p,d) + Ad x min{(Lr(p-r,d), Lr(p-r,d-1) + P1, Lr(p-r,d+1) + P1, Lrmin(p-r) + P2}, where 0 < Ad < 1, "r" indicates a direction vector along an aggregated direction having two directional components such as the x direction component and the y direction component, the term min{} is a function for obtaining the minimum value, Lrmin(p-r) indicates the minimum value of Lr(p-r,d) when the shift value "d" is changed in the coordinates where "p" is shifted in "r" direction, and P1 and P2 are fixed parameters that are set in advance; and

deriving a certain shift value d as a disparity value of an object captured on the first reference area p(x,y) based on the synthesis costs Ls(p,d) synthesized by the synthesizing step,

**characterized in that**

the weight coefficient Ad is changed by an input operation by a user in which a value of the weight coefficient is set differently for each directional path for each frame data in the images.

8. A non-transitory computer-readable carrier medium storing a program that, when executed by a computer, causes the computer to execute the method of the preceding claim.


**Patentansprüche**

1. Disparitätsableitungsvorrichtung (3) zum Ableiten der Disparität eines Objekts auf der Grundlage eines Referenzbilds des Objekts, das an einer ersten Bildaufnahmeposition aufgenommen wurde, und eines Vergleichsbilds des Objekts, das an einer zweiten Bildaufnahmeposition aufgenommen wurde, wobei die Disparitätsableitungsvorrichtung (3) umfasst:

einen Rechner (310) zur Berechnung der Kosten C(p,d) zwischen einem ersten Referenzbereich p(x,y) im Referenzbild und jeder der entsprechenden Bereiche q(x+d, y), die dem ersten Referenzbereich p(x,y) in einem gegebenen Bereich im Vergleichsbild entsprechen, und Kosten zwischen einem zweiten Referenzbereich p'(x',y'), der dem erste Referenzbereich p(x,y) im Referenzbild umgibt, und jedem der entsprechenden Bereiche q'(x'+d, y'), die dem zweiten Referenzbereich p'(x',y') in einem gegebenen Bereich im Vergleichsbild entsprechen;

einen Synthesizer (320), um die Kosten des ersten Referenzbereichs p(x, y) und die Kosten des zweiten Referenzbereichs p'(x', y') als Synthesekosten Ls(p,d) zu synthetisieren, wobei die Synthesekosten Ls(p,d) unter Verwendung des Semi-Global-Matching-Verfahrens und der Gleichung Ls(p,d)=ΣLr(p,d) erhalten werden, wobei die gerichteten Pfadkosten Lr(p,d) berechnet werden als Lr(p,d) = C(p,d) + Ad x min{(Lr(p-r,d), Lr(p-r,d-1) + P1, Lr(p-r,d+1) + P1, Lrmin(p-r) + P2}, wobei 0 < Ad < 1, "r" einen Richtungsvektor entlang einer aggregierten Richtung mit zwei Richtungskomponenten wie der x-Richtungskomponente und der y-Richtungskomponente angibt, der Ausdruck min{} eine Funktion zum Erhalten des Minimalwerts ist, Lrmin(p-r) den Minimalwert von Lr(p-r,d) angibt, wenn der Verschiebungswert "d" in den Koordinaten geändert wird, in denen "p" in "r"-Richtung verschoben wird, und P1 und P2 feste Parameter sind, die im voraus festgelegt werden; und

eine Ableitungseinheit (330), um einen bestimmten Verschiebungswert d als einen Disparitätswert eines Objekts abzuleiten, das auf dem ersten Referenzbereich p(x, y) erfasst wurde, basierend auf den Synthesekosten Ls(p, d), die durch den Synthesizer (320) synthetisiert wurden,

**dadurch gekennzeichnet, dass**

der Gewichtungskoeffizient Ad durch eine Eingabeoperation durch einen Benutzer geändert wird, bei der ein Wert des Gewichtungskoeffizienten für jeden Richtungspfad für jede Bilddaten in den Bildern unterschiedlich eingestellt wird.

2. Disparitätsableitungsvorrichtung (3) nach Anspruch 1, bei der eine erste Gewichtung und eine zweite Gewichtung, die für jeden der Richtungspfade eingestellt sind, für jeden der Richtungspfade mit einer Bedingung änderbar sind, dass die zweite Gewichtung kleiner als die erste Gewichtung ist.

3. Disparitätsableitungsvorrichtung (3) nach Anspruch 1 oder Anspruch 2, bei der eine erste Gewichtung und eine zweite Gewichtung, die für jeden der Richtungspfade eingestellt sind, für jeden der Einzelbilddaten des erfassten Referenzbildes mit einer Bedingung änderbar sind, dass die zweite Gewichtung kleiner als die erste Gewichtung ist.

4. Bewegliche (100) Vorrichtung, umfassend:
die Disparitätsableitungsvorrichtung (3) nach einem der Ansprüche 1 bis 3.

**5.** Bewegliche Vorrichtung (100) nach Anspruch 4, wobei die bewegliche Vorrichtung ein Fahrzeug oder ein Roboter ist.

**6.** Bewegliche Vorrichtung (100) nach Anspruch 4, wobei die bewegliche Vorrichtung ein feststehender Industrieroboter ist

**7.** Computerimplementiertes Verfahren zum Ableiten der Disparität eines Objekts auf der Grundlage eines Referenzbilds des Objekts, das an einer ersten Bildaufnahmeposition aufgenommen wurde, und eines Vergleichsbilds des Objekts, das an einer zweiten Bildaufnahmeposition aufgenommen wurde, wobei das Verfahren die folgenden Schritte umfasst:

Berechnen der Kosten C(p,d) zwischen einem ersten Referenzbereich p(x,y) im Referenzbild und jedem der entsprechenden Bereiche q(x+d, y), die dem ersten Referenzbereich p(x,y) in einer gegebenen Region im Vergleichsbild entsprechen, und der Kosten zwischen dem zweiten Referenzbereich p'(x',y'), der den ersten Referenzbereich p(x,y) im Referenzbild umgibt, und jeder der entsprechenden Bereiche q'(x'+d, y'), die dem zweiten Referenzbereich p'(x',y') in einem gegebenen Bereich im Vergleichsbild entsprechen;
Synthetisieren der Kosten des ersten Referenzbereichs p(x,y) und der Kosten des zweiten Referenzbereichs p'(x',y') als Synthesekosten Ls(p,d,), wobei die Synthesekosten Ls(p,d) unter Verwendung der Semi-Global-Matching-Methode und der Gleichung Ls(p,d)=ΣLr(p,d) erhalten werden,
wobei die gerichteten Pfadkosten Lr(p,d) berechnet werden als Lr(p,d) = C(p,d) + Ad x min{(Lr(p-r,d), Lr(p-r,d-1) + P1, Lr(p-r,d+1) + P1, Lrmin(p-r) + P2}, wobei 0 < Ad < 1, "r" einen Richtungsvektor entlang einer aggregierten Richtung mit zwei Richtungskomponenten wie der x-Richtungskomponente und der y-Richtungskomponente angibt, der Ausdruck min{} eine Funktion zum Erhalten des Minimalwerts ist, Lrmin(p-r) den Minimalwert von Lr(p-r,d) angibt, wenn der Verschiebungswert "d" in den Koordinaten geändert wird, in denen "p" in "r"-Richtung verschoben wird, und P1 und P2 feste Parameter sind, die im voraus festgelegt werden; und
Ableiten eines bestimmten Verschiebungswerts d als Disparitätswert eines Objekts, das auf dem ersten Referenzbereich p(x,y) erfasst wurde, basierend auf den Synthesekosten Ls(p,d), die durch den Syntheseschritt synthetisiert wurden,
**dadurch gekennzeichnet, dass**
der Gewichtungskoeffizient Ad durch eine Eingabeoperation durch einen Benutzer geändert wird, bei der ein Wert des Gewichtungskoeffizienten für jeden Richtungspfad für jede Bilddaten in den Bildern unterschiedlich eingestellt wird.

**8.** Nichtflüchtiges computerlesbares Trägermedium, das ein Programm speichert, das, wenn es von einem Computer ausgeführt wird, den Computer veranlasst, das Verfahren nach dem vorhergehenden Anspruch auszuführen.

**Revendications**

**1.** Appareil de dérivation de disparité (3) pour dériver la disparité d'un objet en fonction d'une image de référence de l'objet capturée à une première position de capture d'image et une image de comparaison de l'objet capturée à une deuxième position de capture d'image, l'appareil de dérivation de disparité (3) comprenant :

un calculateur (310) pour calculer des coûts C(p,d) entre une première zone de référence p(x,y) de l'image de référence et chacune des zones correspondantes q(x+d, y) qui correspondent à la première zone de référence p(x,y) dans une région donnée de l'image de comparaison, et des coûts entre une deuxième zone de référence p'(x',y'), entourant la première zone de référence p(x,y) de l'image de référence, et chacune des zones correspondantes q'(x'+d, y') qui correspondent à la deuxième zone de référence p'(x',y') dans une région donnée de l'image de comparaison ;
un synthétiseur (320) pour synthétiser les coûts de la première zone de référence p(x,y) et les coûts de la deuxième zone de référence p'(x',y') en tant que coûts de synthèse Ls(p,d), le coût de synthèse Ls(p,d) étant obtenu en utilisant la méthode de mise en correspondance semi-globale (semi-global matching) et l'équation Ls(p,d) = ΣLr(p,d),
étant entendu que le coût d'un trajet directionnel Lr(p,d) est calculé sous la forme Lr(p,d) = C(p,d) + Ad x min{(Lr(p-r,d), Lr(p-r,d-1) + P1, Lr(p-r,d+1) + P1, Lrmin(p-r) + P2}, où 0 < Ad < 1, « r » indique un vecteur de direction le long d'une direction agrégée ayant deux composantes directionnelles telles que la composante de direction x et la composante de direction y,
le terme min{ } est une fonction permettant d'obtenir la valeur minimale.
Lrmin(p-r) indique la valeur minimale de Lr(p-r,d) lorsque la valeur de décalage « d » est modifiée dans les coordonnées où « p » est décalé dans la direction « r », et P1 et P2 sont des paramètres fixes qui sont définis à l'avance ; et

une unité de dérivation (330) pour dériver une certaine valeur de décalage d en tant que valeur de disparité d'un objet capturé sur la première zone de référence p(x,y) en fonction des coûts de synthèse Ls(p,d) synthétisés par le synthétiseur (320),

**caractérisé en ce que**

le coefficient de pondération Ad est modifié par une opération d'entrée effectuée par un utilisateur dans laquelle la valeur du coefficient de pondération est définie différemment pour chaque trajet directionnel pour chaque donnée de trame des images.

2. Appareil de dérivation de disparité (3) selon la revendication 1, dans lequel un premier poids et un deuxième poids définis pour chacun des trajets directionnels sont modifiables pour chacun des trajets directionnels à condition que le deuxième poids soit inférieur au premier poids.

3. Appareil de dérivation de disparité (3) selon la revendication 1 ou la revendication 2, dans lequel un premier poids et un deuxième poids définis pour chacun des trajets directionnels sont modifiables pour chaque donnée de trame de l'image de référence capturée à condition que le deuxième poids soit inférieur au premier poids.

4. Appareil mobile (100) comprenant :
l'appareil de dérivation de disparité (3) selon l'une quelconque des revendications 1 à 3.

5. Appareil mobile (100) selon la revendication 4, ledit appareil mobile étant un véhicule ou un robot.

6. Appareil mobile (100) selon la revendication 4, ledit appareil mobile étant un robot industriel fixe.

7. Procédé, mis en oeuvre par ordinateur, de dérivation de disparité d'un objet en fonction d'une image de référence de l'objet capturée à une première position de capture d'image et une image de comparaison de l'objet capturée à une deuxième position de capture d'image, le procédé comprenant les étapes consistant à :

calculer des coûts C(p,d) entre une première zone de référence p(x,y) de l'image de référence et chacune des zones correspondantes q(x+d, y) qui correspondent à la première zone de référence p(x,y) dans une région donnée de l'image de comparaison, et des coûts entre la deuxième zone de référence p'(x',y'), entourant la première zone de référence p(x,y) dans l'image de référence, et chacune des zones correspondantes q'(x'+d, y') qui correspondent à la deuxième zone de référence p'(x',y') dans une région donnée de l'image de comparaison ;

synthétiser les coûts du premier zone de référence p(x,y) et le coût de la deuxième zone de référence p'(x',y') en tant que coûts de synthèse Ls(p,d), le coût de synthèse Ls(p,d) étant obtenu en utilisant la méthode de mise en correspondance semi-globale (semi-global matching) et l'équation Ls(p,d) = ΣLr(p,d),

étant entendu que le coût d'un trajet directionnel Lr(p,d) est calculé sous la forme Lr(p,d) = C(p,d) + Ad x min{(Lr(p-r,d), Lr(p-r,d-1) + P1, Lr(p-r,d+1) + P1, Lrmin(p-r) + P2}, où 0 < Ad < 1, « r » indique un vecteur de direction le long d'une direction agrégée ayant deux composantes directionnelles telles que la composante de direction x et la composante de direction y,

le terme min{ } est une fonction permettant d'obtenir la valeur minimale.

Lrmin(p-r) indique la valeur minimale de Lr(p-r,d) lorsque la valeur de décalage « d » est modifiée dans les coordonnées où « p » est décalé dans la direction « r », et P1 et P2 sont des paramètres fixes qui sont définis à l'avance ; et

dériver une certaine valeur de décalage d en tant que valeur de disparité d'un objet capturé sur la première zone de référence p(x,y) en fonction des coûts de synthèse Ls(p,d) synthétisés par l'étape de synthétisation,

**caractérisé en ce que**

le coefficient de pondération Ad est modifié par une opération d'entrée effectuée par un utilisateur dans laquelle une valeur du coefficient de pondération est définie différemment pour chaque trajet directionnel pour chaque donnée de trame des images.

8. Support non transitoire lisible par ordinateur, sur lequel est stocké un programme qui, lorsqu'il est exécuté par un ordinateur, amène ledit ordinateur à exécuter le procédé de la revendication précédente.

# FIG. 1

FIG. 2A

FIG. 2B

FIG. 2C

EP 2 922 026 B1

# FIG. 3A

# FIG. 3B

REFERENCE PIXEL

CORRESPONDING PIXEL

EPIPOLAR LINE EL

$p(x,y)$

$q(x+d,y)$

$d$

REFERENCE IMAGE

COMPARISON IMAGE

# FIG. 4

# FIG. 5

# FIG. 6

# FIG. 7A

# FIG. 7B

# FIG. 8

# FIG. 9

# FIG. 10

Lr(p−nr, d) CACULATION

USE

Lr(p−(n−1)r, d) CACULATION

USE

Lr(p, d) CACULATION

# FIG. 11

EP 2 922 026 B1

REFERENCE
IMAGE

COMPARISON
IMAGE

310 → COST
CALCULATOR

320 → COST
SYNTHESIZER

330 → DISPARITY
VALUE
DERIVING UNIT

DISPARITY
VALUE OF
ENTIRE
PIXELS

# FIG. 12

$Lr'(p-nr, d)$ CACULATION

USE OF MULTIPLICATION OF "Ad"

$Lr'(p-(n-1)r, d)$ CACULATION

USE OF MULTIPLICATION OF "Ad"

USE OF MULTIPLICATION OF "Ad$^2$"

$Lr'(p, d)$ CACULATION

# FIG. 13

```
              ┌─────────┐
              │  START  │
              └─────────┘
                   │
        ┌──────────┴──────────┐
        ▼                     ▼
┌──────────────────┐  ┌──────────────────┐
│ GENERATE ANALOG  │S1-1│ GENERATE ANALOG │S1-2
│   IMAGE DATA     │  │   IMAGE DATA     │
└──────────────────┘  └──────────────────┘
        │                     │
        ▼                     ▼
┌──────────────────┐  ┌──────────────────┐
│ CONVERT TO DIGITAL│S2-1│ CONVERT TO DIGITAL│S2-2
│   IMAGE DATA     │  │   IMAGE DATA     │
└──────────────────┘  └──────────────────┘
        │                     │
        ▼                     ▼
┌──────────────────┐  ┌──────────────────┐
│ OUTPUT REFERENCE │S3-1│ OUTPUT COMPARISON│S3-2
│   IMAGE DATA     │  │   IMAGE DATA     │
└──────────────────┘  └──────────────────┘
        └──────────┬──────────┘
                   ▼
        ┌──────────────────┐
        │  CALCULATE COST  │ S4
        └──────────────────┘
                   │
                   ▼
        ┌──────────────────────┐
        │ CALCULATE DIRECTIONAL│ S5
        │     PATH COST        │
        └──────────────────────┘
                   │
                   ▼
        ┌──────────────────────┐
        │ OUTPUT SYNTHESIS COST│ S6
        └──────────────────────┘
                   │
                   ▼
        ┌──────────────────────┐
        │  DERIVE DISPARITY    │ S7
        └──────────────────────┘
                   │
                   ▼
              ┌─────────┐
              │   END   │
              └─────────┘
```

# FIG. 14A

ROAD SIGN M

# FIG. 14B    FIG. 14C  FIG. 14D  FIG. 14E

ROAD SIGN M

# FIG. 15

ROAD SIGN M

STRONG TEXTURE

p-nr

p-(n-1)r

WEAK TEXTURE

p

# FIG. 16

C(p−nr, d)

C(p−(n−1)r, d)

C(p, d)

SYNTHESIS COST

EP 2 922 026 B1

**EP 2 922 026 B1**

## REFERENCES CITED IN THE DESCRIPTION

### Patent documents cited in the description

- JP 2006090896 A

- JP 2012181142 A

### Non-patent literature cited in the description

- Accurate and Efficient Stereo Processing by Semi-Global Matching and Mutual Information. **HIRSCHMULLER H.** PROCEEDINGS / 2005 IEEE COMPUTER SOCIETY CONFERENCE ON COMPUTER VISION AND PATTERN RECOGNITION. IEEE, 20 June 2005, vol. 2, 807-814
- Classification and evaluation of cost aggregation methods for stereo correspondence. **TOMBARI F et al.** COMPUTER VISION AND PATTERN RECOGNITION, 2008. CVPR 2008. IEEE CONFERENCE ON. IEEE, 23 June 2008, 1-8

- **KUK-JIN YOON et al.** Adaptive support-weight approach for correspondence search. *IEEE Transactions on Pattern Analysis and Machine Intelligence,* 650-656
- ET AL: "Stereo Matching with Weighted Feature Constraints for Aerial Images. **XIAO XIONGWU et al.** 2013 SEVENTH INTERNATIONAL CONFERENCE ON IMAGE AND GRAPHICS. IEEE, 26 July 2013, 562-567
- **HIRSCHMULLER, H.** Accurate and Efficient Stereo Processing by Semi-Global Matching and Mutual Information. *Inst. of Robotics & Mechatronics Oberpfaffenhofen, German Aerosp. Center, Wessling*